# EUROPEAN PATENT APPLICATION

(11) **EP 1 768 396 A2**
(43) Date of publication of application: **28.03.2007**
(21) Application number: 06019759.7
(22) Date of filing: 21.09.2006
(51) Int. Cl.: H04N 5/445

(54) **Device and method for managing electronic program guide data in digital broadcasting reception terminal**

(30) Priority: 21.09.2005 KR 20050087853
(71) Applicant: Samsung Electronics Co., Ltd., Suwon-si, Gyeonggi-Do (KR)
(72) Inventor: Park, Chang-Sul, Yeongtong-gu Suwon-si Gyeonggi-do (KR); Stone, Jay L., Aptos CA 95003 (US)
(74) Representative: Lang, Johannes

(57) **Abstract**

Disclosed is a device for managing electronic program guide (EPG) data in a digital broadcasting reception terminal, which includes an EPG parsing unit for separating EPG data from a received digital broadcast signal; an EPG user interface unit for composing a broadcast guide picture for offering digital broadcast program information using specific one of the EPG data; an EPG management unit for extracting predetermined data from the EPG data to generate a database, for reading specific data from the generated database when receiving a request for the data to compose the broadcast guide picture, and for transferring the read data to the EPG user interface unit; and a memory for storing the EPG data and the generated database under the control of the EPG management unit. The device generates a separate database for storing and managing the data necessary to compose a broadcast guide picture among the received EPG data, which enables rapid and effective access to the data.

## Description

### BACKGROUND OF THE INVENTION

### 1. Field of the Invention

The present invention relates to a digital broadcasting reception terminal, and more particularly to a device and method for managing electronic program guide data in a digital broadcasting reception terminal.

### 2. Description of the Related Art

Digital broadcasting generally refers to high-quality, high-definition audio/video broadcasting services replacing conventional analog services.

Recent developments in digital broadcasting technologies and mobile communication technologies have led to an increasing interest in digital broadcasting services allowing people to view digital broadcasts even while moving. Particularly, digital multimedia broadcasting ("DMB") services offered through mobile communication terminals are attracting keen interest. DMB is a mobile broadcasting service that enables people to view various multimedia programs broadcast over multiple channels on a personal handheld receiver or an in-car digital TV receiver with a non-directional receiving antenna.

One of the great advantages of digital broadcasting services is a higher channel efficiency. In analog broadcasting, only a single program can be broadcast on one physical channel. In contrast, digital broadcasting can transmit a plurality of programs simultaneously over one physical channel. Since a vast number of programs is provided in digital broadcasting, there is a need for program information that facilitates a viewer's selection of a desired program. An electronic program guide (EPG) is an on-screen guide that offers such broadcast program information.

The EPG provides information about available channels, programs being currently broadcast on each channel, start/end times of scheduled broadcast programs and other program guides (hereinafter referred to as "EPG data"). Typically, EPG data is provided at periodic time intervals or whenever updated.

Digital broadcasting reception terminals receive and store EPG data. In response to a user's request, the digital broadcasting reception terminals generate a broadcast guide picture from the stored EPG data and offer the generated picture to the user. The EPG data can be received according to the user's request.

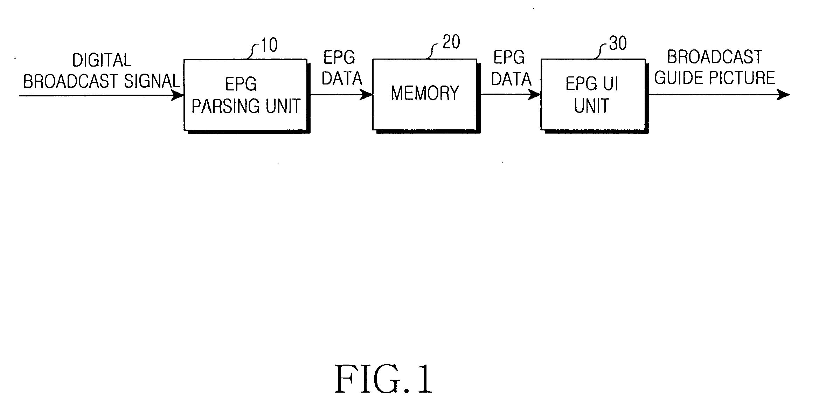

Hereinafter, how the EPG data is managed in a digital broadcasting reception terminal will be explained with reference to the EPG data management device of a conventional digital broadcasting reception terminal as shown in FIG. 1.

Referring to FIG. 1, the digital broadcasting reception terminal separates EPG data carried in a PSI (Program Specific Information) field of MPEG-2 TS (Motion Picture Experts Group-2 Transport Stream) from a digital broadcast signal through an EPG parsing unit 10, and stores the EPG data in a memory 20 (for example, a NAND flash memory). An EPG user interface unit 30 composes a broadcast guide picture using the EPG data and outputs the picture through a display unit to provide a user with information on digital broadcast programs.

The EPG parsing unit 10 records the EPG data in the memory 20 all at once. Also, the EPG user interface unit 30 reads the recorded EPG data from the memory 20 all at once. Thus, it takes considerable time to record and read the EPG data in the conventional digital broadcasting reception terminal.

In addition, errors frequently occur when the EPG user interface unit 30 reads EPG data during recording of the EPG data in the memory 20 by the EPG parsing unit 10.

### SUMMARY OF THE INVENTION

Accordingly, the present invention has been made to solve the above-mentioned problems occurring in the prior art, and an object of the present invention is to provide a device and method for effectively managing electronic program guide data in a digital broadcasting reception terminal.

In order to accomplish the above object of the present invention, there is provided a device for managing electronic program guide ("EPG") data in a digital broadcasting reception terminal, which includes an EPG parsing unit for separating EPG data from a received digital broadcast signal; an EPG user interface unit for composing a broadcast guide picture for offering digital broadcast program information using a specific one of the EPG data; an EPG management unit for extracting predetermined data from the EPG data to generate a database, for reading specific data from the generated database when receiving a request for the data to compose the broadcast guide picture, and for transferring the read data to the EPG user interface unit; and a memory for storing the EPG data and the generated database under the control of the EPG management unit.

In accordance with another aspect of the present invention, there is provided a method for managing electronic program guide ("EPG") data in a digital broadcasting reception terminal, which includes separating EPG data from a received digital broadcast signal; extracting data necessary to compose a broadcast guide picture from the EPG data and generating a separate database for each extracted data; storing the generated database in a memory; reading corresponding data from the database stored in the memory when there is a request for data to compose the broadcast guide picture; and composing the broadcast guide picture using the read data.

### BRIEF DESCRIPTION OF THE DRAWINGS

The above and other objects, features and advantages of the present invention will be more apparent from the following detailed description taken in conjunction with the accompanying drawings, in which:
FIG. 1 illustrates an EPG data management device in a conventional digital broadcasting reception terminal;
FIG. 2 is a block diagram of a digital broadcasting reception terminal according to a preferred embodiment of the present invention;
FIG. 3 illustrates the configuration of the digital broadcasting reception terminal in FIG. 2 in more detail;
FIGs. 4A through 4C illustrate examples of databases generated by a digital broadcasting reception terminal using EPG data according to a preferred embodiment of the present invention;
FIG. 5 is a flow chart showing the operations of a digital broadcasting reception terminal according to a preferred embodiment of the present invention; and
FIGs. 6A through 6E are views explaining the operations of a digital broadcasting reception terminal according to a preferred embodiment of the present invention.

### DETAILED DESCRIPTION OF THE PREFERRED EMBODIMENT

Hereinafter, a preferred embodiment of the present invention will be described with reference to the accompanying drawings. In the following description of the present invention, a detailed description of known functions and configurations incorporated herein will be omitted when it may make the subject matter of the present invention unclear.

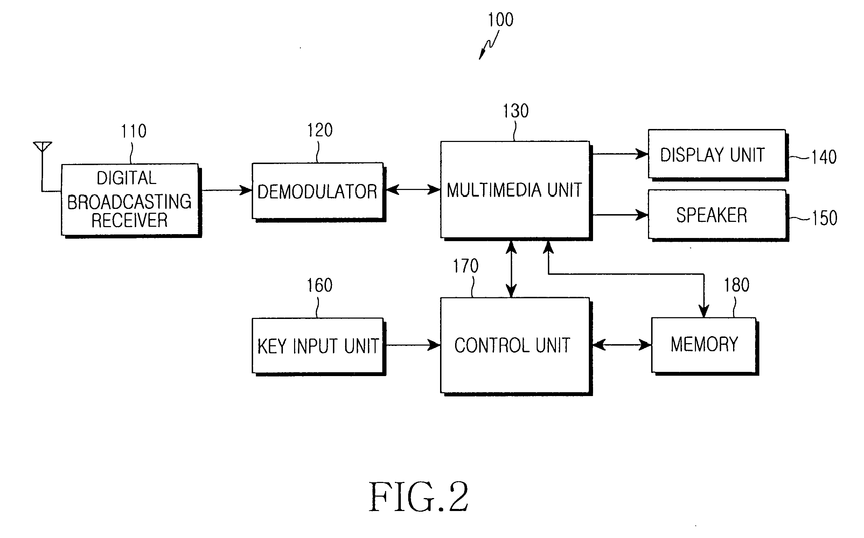

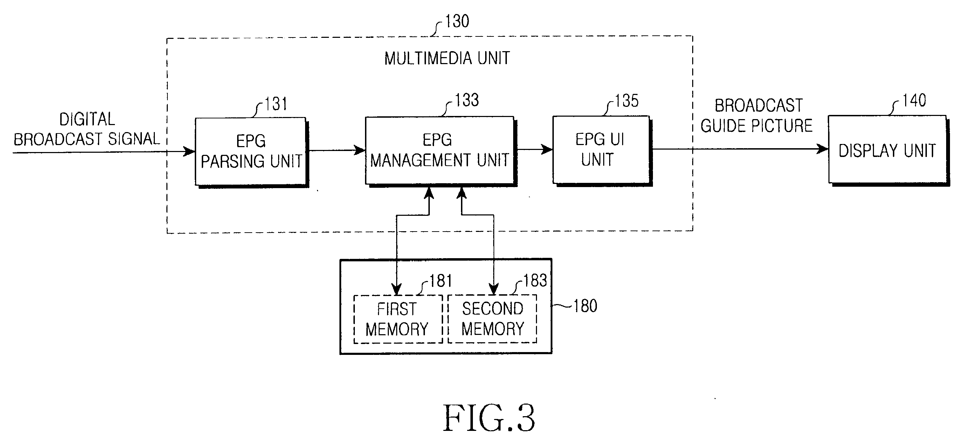

FIG. 2 is a block diagram of a digital broadcasting reception terminal according to a preferred embodiment of the present invention, and FIG. 3 illustrates the configuration of the digital broadcasting reception terminal of FIG. 2 in more detail.

The digital broadcasting reception terminal 100 includes a digital broadcasting receiver 110, a demodulator 120, a multimedia unit 130, a display unit 140, an audio processor (speaker) 150, a key input unit 160, a control unit 170 and a memory 180. Under the control of the control unit 170, the digital broadcasting receiver 110 receives a digital broadcast signal and outputs the received signal to the demodulator 120. The demodulator 120 demodulates the digital broadcast signal received from the digital broadcast receiver 110 into a digital data stream which is then output to the multimedia unit 130.

When a user inputs a request for outputting a digital broadcast of a specific channel in a digital broadcast output mode, the multimedia unit 130 sets the frequency of the digital broadcasting receiver 110 to a specific frequency of the desired channel under the control of the control unit 170. Therefore, the digital broadcasting receiver 110 can receive a digital broadcast signal of a TV station channel desired by the user.

The multimedia unit 130 demultiplexes the digital broadcast signal demodulated into a digital data stream to separate it into an audio data stream and a video data stream. Also, the multimedia unit 130 decodes the audio data stream and the video data stream into an analog audio signal and into an analog video signal and outputs the signals to the speaker 150 and the display unit 140, respectively.

Referring to FIG. 3, the multimedia unit 130 may include an EPG parsing unit 131, an EPG management unit 133 and an EPG user interface unit 135. The EPG parsing unit 131 separates EPG data from the digital broadcast signal demodulated by the demodulator 120 and transfers the EPG data to the EPG management unit 133. The EPG management unit 133 stores the received EPG data in the memory 180. The memory 180 may be composed of a first memory 181 (for example, a NAND flash memory) and a second memory 183 (for example, an SDRAM). Preferably, the EPG data is stored in the first memory 181 so as not to be deleted even when the digital broadcasting reception terminal 100 is turned off.

The EPG user interface unit 135 composes a broadcast guide picture using specific a one of the EPG data to provide the user with information on digital broadcast programs. The composed broadcast guide picture is displayed on the display unit 140. The specific data used to compose the broadcast guide picture includes an SDT (Service Description Table), an EIT (Event Information Table) and a BAT (Bouquet Association Table) in the EPG data.

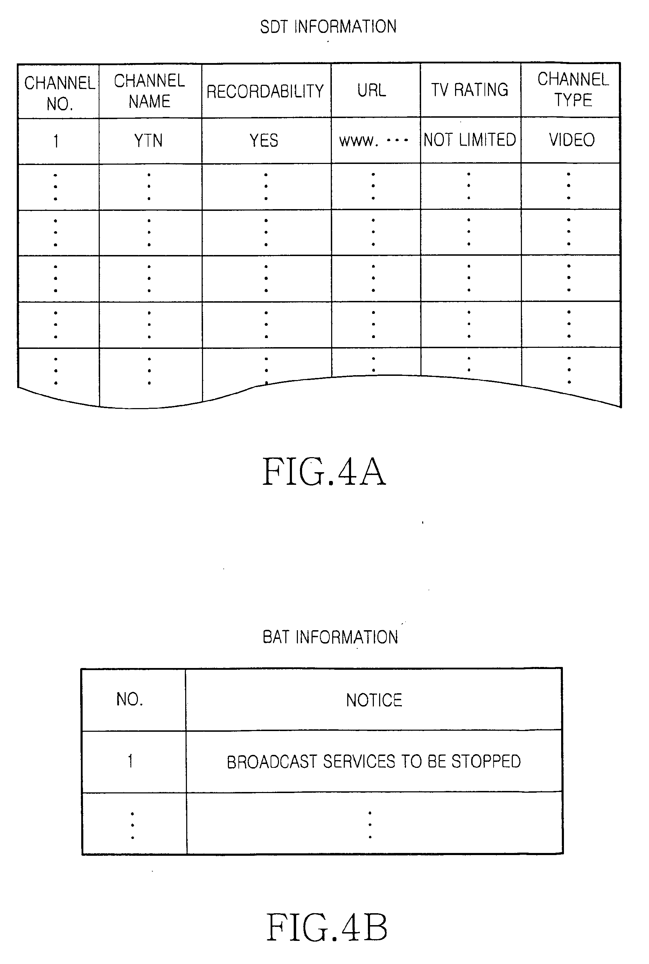

When storing the EPG data in the first memory 181, the EPG management unit 133 extracts the specific data, i.e. SDT, EIT and BAT, from the EPG data and generates databases as shown in FIGs. 4A through 4C. Preferably, the EPG management unit 133 also stores the generated databases in the first memory 181. The EPG management unit 133 may generate multiple databases for the respective data or a single database for all the extracted data.

FIGs. 4A through 4C illustrate examples of databases generated by the digital broadcasting reception terminal 100 using EPG data according the present invention.

FIG. 4A illustrates a database generated by the EPG management unit 133 using an SDT (information on each channel) among EPG data. The database shows channel numbers, channel names, program recordability, URL (Uniform Resource Locator), TV ratings, channel types (for example, an audio channel or a video channel).

FIG. 4B illustrates a database generated by the EPG management unit 133 using a BAT (information on TV stations including notices) among EPG data. The database shows various notices concerning broadcast services.

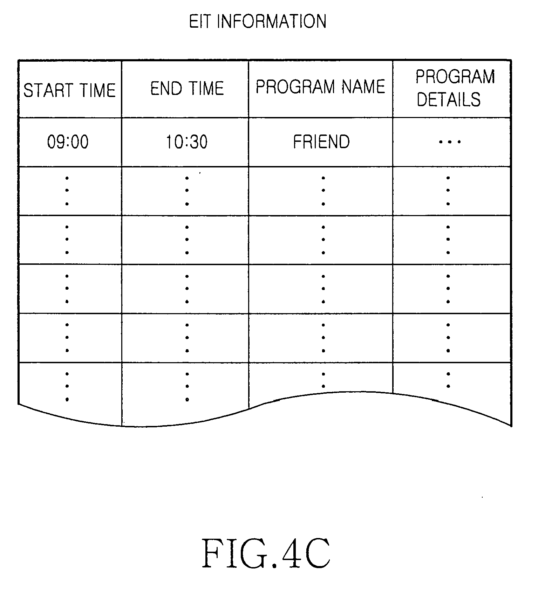

FIG. 4C illustrates a database generated by the EPG management unit 133 using an EIT (information on programs of each channel) among EPG data. The database shows the start time, end time, title and other details (for example, casts and summary) of each program.

The EPG parsing unit 131 may separately and independently transfer the SDT, EIT and BAT information separated from the EPG data to the EPG management unit 133. At this time, the EPG management unit 133 can generate databases using the SDT, EIT and BAT information and store the databases in the first memory 181, without the need to separately extract the SDT, EIT and BAT information from the EPG data.

When there is a request for specific data for composing the broadcast guide picture (that is, when the user selects a "video channel" menu on the initial screen for the broadcast guide), the EPG management unit 133 searches for the requested data (for example, SDT information on each channel) in the databases stored in the first memory 181. The EPG management unit 133 reads the detected data to the second memory 183 and transfers the read data to the EPG user interface unit 135 that will compose the broadcast guide picture. Preferably, the second memory 183 is an SDRAM providing a high-speed reading.

Alternatively, the EPG management unit 133 may temporarily store the SDT, EIT and BAT information as stored in the first memory 181 and the databases generated using those information in the second memory 183. When receiving a request for specific data for composing the broadcast guide picture, the EPG management unit 133 may promptly read the requested data from the information or databases temporarily stored in the second memory 183 and transfer the read data to the EPG user interface unit 135.

Although the multimedia unit 130 has been explained as a separate unit in the digital broadcasting reception terminal 100, it can be incorporated into the control unit 170.

The display unit 140 outputs various display data generated from the digital broadcasting reception terminal 100. The display unit 140 may comprise an LCD (Liquid Crystal Display) which can support high-resolution digital broadcast data. When the LCD is a touch screen, it can serve as an input device. Also, the display unit 140 displays digital broadcast data received through the digital broadcasting receiver 110 and EPG data under the control of the control unit 170. The EPG data displayed on the display unit 140 is a broadcast guide picture. While viewing the displayed broadcast guide picture, the user can select a desired channel or any other menu through the key input unit 160.

The speaker 150 outputs audio data of the digital broadcast data received through the digital broadcasting receiver 110 under the control of the control unit 170. At this time, the control unit 170 may control only the speaker 150 to output the audio data, without displaying the broadcast guide picture composed by the multimedia unit 130 using the EPG data.

The key input unit 160 transfers a signal corresponding to an external user demand to the control unit 170. In other words, the key input unit 160 receives an operation signal input by the user by pressing a key. The operation signal may be either input information for controlling the control unit 170 or user selection information.

The memory 180 stores various information and data necessary to control operations of the digital broadcasting reception terminal 100. Also, the memory 180 stores EPG data including information on digital broadcast programs and digital broadcast data received through the digital broadcasting receiver 110.

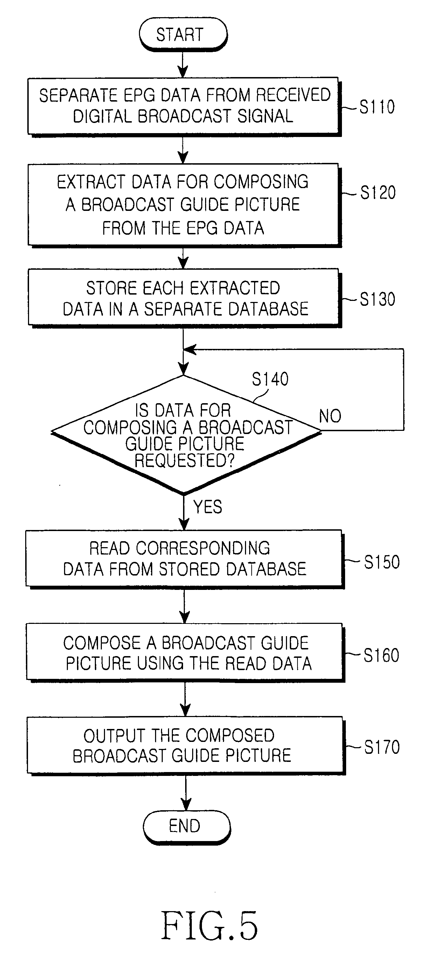

FIG. 5 is a flow chart showing the operations of the digital broadcasting reception terminal 100 according to a preferred embodiment of the present invention. The process will be explained in detail with reference to FIGs. 2 and 3.

In the digital broadcasting mode, the EPG parsing unit 131 separates EPG data from a digital broadcast signal received through the digital broadcasting receiver 110 and transfers the EPG data to the EPG management unit 133 (S110). At this time, the EPG parsing unit 131 may separate the SDT, EIT and BAT information independent from the EPG data and transfer those information separately to the EPG management unit 133.

The EPG management unit 133 receives the EPG data from the EPG parsing unit 131 under the control of the control unit 170 and extracts specific data for composing a broadcast guide picture (S120). The specific data includes an SDT (Service Description Table) providing information on each channel, an EIT (Event Information Table) providing information on each broadcast program, and a BAT (Bouquet Association Table) providing notices from TV stations.

The EPG management unit 133 generates databases using the extracted data, i.e. SDT, EIT and BAT information, and stores the generated databases in the first memory 181 (S130). Since the EPG data other than the extracted data is rarely used to compose a broadcast guide picture, such unused data is preferably stored without being generated as a database. The EPG management unit 133 may generate a single database for all the extracted data. In such a case, the single database may store all information of the above three tables.

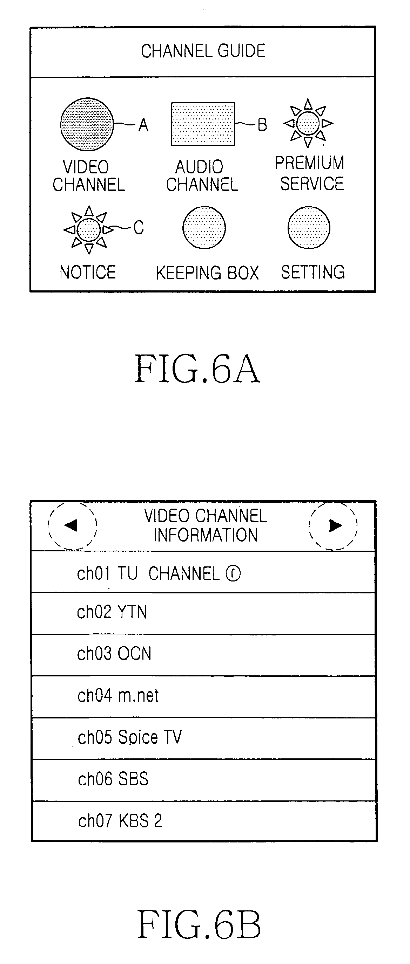

The control unit 170 checks whether there is a request for data for composing a broadcast guide picture (S140). The data refers to digital broadcast program information, i.e. data necessary to compose a broadcast guide picture of a particular item that is selected by the user under a broadcast guide menu. In other words, while the initial screen picture for a broadcast guide is displayed as illustrated in FIG. 6A, the control unit 170 checks whether the user selects any item under the broadcast guide menu.

When there is a request for data for composing a broadcast guide picture (i.e. when any item under the broadcast guide menu is selected), the control unit 170 controls the EPG management unit 133 to read the requested data from the databases stored in the first memory 181 and to transfer the data to the EPG user interface unit 135 (S150). For example, when the user selects a "video channel" item on the displayed initial screen for a broadcast guide using the key input unit 160, the EPG management unit 133 searches for data necessary to compose a broadcast guide picture of the selected "video channel" item in the database which is generated using SDT information and then reads the corresponding data.

When the read data is transferred, the EPG user interface unit 135 composes a broadcast guide picture using the received data under the control of the control unit 170 (S160). In other words, the EPG user interface unit 135 composes a broadcast guide picture of the selected item.

The control unit 170 outputs the broadcast guide picture composed by the EPG user interface unit 135 to the display unit 140 (S170).

FIGs. 6A through 6E are views for explaining the operations of the digital broadcasting reception terminal according to a preferred embodiment of the present invention, which are explained in detail with further reference to FIG. 5.

FIG. 6A illustrates the initial screen for a broadcast guide displayed on the digital broadcasting reception terminal. When the "video channel" item A or "audio channel" item B under the channel guide menu is selected, a broadcast guide picture of the selected item can be composed using SDT providing information on each channel and EIT providing information on each broadcast program. Also, a broadcast guide picture of the "notice" item C can be composed using BAT information.

When the user selects the "video channel" item A during the display of the initial screen of FIG. 6A, a broadcast guide picture as illustrated in FIG. 6B is composed using SDT channel information and displayed on the display unit through steps S150 through S170.

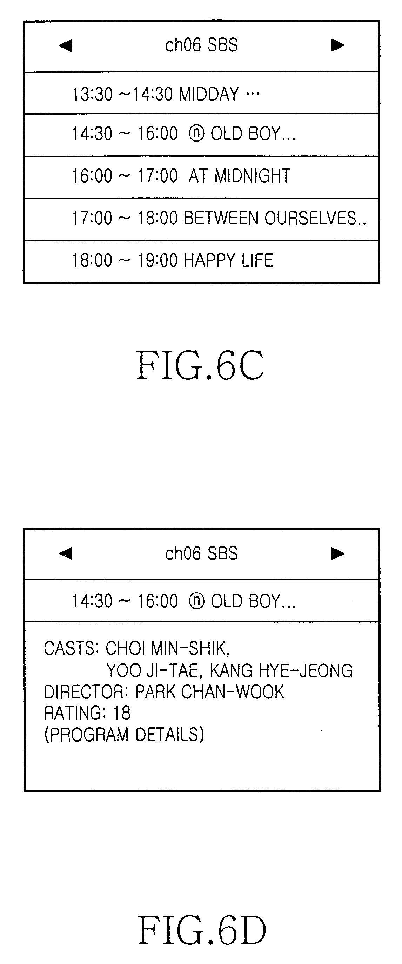

When the user selects a specific channel (for example, CH 06) in the broadcast guide picture as illustrated in FIG. 6B, a new broadcast guide picture as illustrated in FIG. 6C is composed using EIT program information and displayed on the display unit through steps S150 and S170. The new broadcast guide picture lists scheduled programs and their broadcast times as illustrated in FIG. 6C.

When the user selects a specific program (for example, a movie "Old Boy") in the broadcast guide picture of FIG. 6C, another new broadcast guide picture as illustrated in FIG. 6D is composed using EIT information and displayed on the display unit. The new broadcast guide picture shows detailed information on the selected program, such as casts, movie director, film rating and a brief explanation of the selected program.

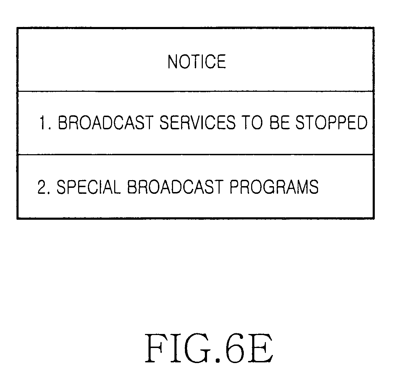

When the user selects the "Notice" item C on the initial screen of FIG. 6A, a broadcast guide picture as illustrated in FIG. 6E is composed using BAT TV station information and displayed on the display unit.

As explained above, the digital broadcasting reception terminal according to the present invention extracts data necessary to compose a broadcast guide picture from the received EPG data, and stores and manages the data in a separately generated database to enable rapid and effective access.

In addition, the separate management of the data for composing a broadcast guide picture can reduce repeated use of the EPG data, thereby enabling effective use of the memory embedded in the digital broadcasting reception terminal.

Although a preferred embodiment of the present invention has been described for illustrative purposes, those skilled in the art will appreciate that various modifications, additions and substitutions are possible, without departing from the scope and spirit of the invention as disclosed in the accompanying claims, including the full scope of equivalents thereof.

## Claims

1. A device for managing electronic program guide (EPG) data in a digital broadcasting reception terminal, which comprises:
an EPG parsing unit for separating EPG data from a received digital broadcast signal;
an EPG user interface unit for composing a broadcast guide picture for of fering digital broadcast program information using a specific one of the EPG data;
an EPG management unit for extracting predetermined data from the EPG data to generate a database, for reading specific data from the generated database when receiving a request for the data to compose the broadcast guide picture, and for transferring the read data to the EPG user interface unit; and
a memory for storing the EPG data and the generated database under the control of the EPG management unit.

2. The device as claimed in claim 1, wherein said specific data is one of an SDT (Service Description Table) providing information on each channel, an EIT (Event Information Table) providing information on each broadcast program and a BAT (Bouquet Association Table) providing information on TV stations including TV station notices.

3. The device as claimed in claim 1, wherein said EPG management unit extracts specific data from the EPG data to generate a database and stores the generated database together with the EPG data in the memory.

4. The device as claimed in claim 2, wherein said EPG mnagement uit extracts specific data from the EPG data to generate a database and store the generated database together with the EPG data in the memory.

5. The device as claimed in claim 1, wherein said memory consists of a first memory for storing the EPG data and a second memory for temporarily storing the specific data read from the first memory.

6. The device as claimed in claim 1, further comprising a display unit for displaying the broadcast guide picture composed by the EPG user interface unit.

7. The device as claimed in claim 6, wherein said request for data to compose the broadcast guide picture is a data request for composing a broadcast guide picture of an item selected by the user under a broadcast guide menu displayed on the display unit.

8. The device as claimed in claim 1, wherein said EPG parsing unit separates different data for composing the broadcast guide picture independent from the EPG data and transfers the different data separately to the EPG management unit.

9. The device as claimed in claim 8, wherein said EPG management unit generates a database when receiving the data for composing the broadcast guide picture from the EPG parsing unit and stores the generated database in the memory.

10. A method for managing electronic program guide (EPG) data in a digital broadcasting reception terminal, which comprises the steps of:
separating EPG data from a received digital broadcast signal;
extracting data necessary to compose a broadcast guide picture from the EPG data and generating a separate database for each item of extracted data;
storing the generated database in a memory;
reading corresponding data from the database stored in the memory when there is a request for data to compose the broadcast guide picture; and
composing the broadcast guide picture using the read data.

11. The method as claimed in claim 10, wherein said data for composing a broadcast guide picture is one of an SDT (Service Description Table) providing information on each channel, an EIT (Event Information Table) providing information on each broadcast program and a BAT (Bouquet Association Table) providing information on TV stations including TV station notices.

12. The method as claimed in claim 10, further comprising displaying the composed broadcast guide picture.

13. The method as claimed in claim 12, wherein said data reading step includes reading data for composing a broadcast guide picture of the selected item from the database stored in the memory when an item under a displayed broadcast guide menu is selected by the user.
